# EUROPÄISCHE PATENTANMELDUNG

(11) **EP 1 650 482 A1**
(43) Veröffentlichungstag der Anmeldung: **26.04.2006**
(21) Anmeldenummer: 05022625.7
(22) Anmeldetag: 18.10.2005
(51) Int. Cl.: F16K 3/24, F25B 41/06

(54) **Expansionsventil, insbesondere für eine Klimaanlage eines Kraftfahrzeugs**

(30) Priorität: 20.10.2004 US 969699
(71) Anmelder: Behr America, Inc, Troy, Michigan 48083 (US)
(72) Erfinder: Zeng, Zhongping, Okemos MI 48864 (US)
(74) Vertreter: Grauel, Andreas

(57) **Zusammenfassung**

Expansionsventil, insbesondere für eine Klimaanlage eines Kraftfahrzeugs, umfassend ein Ventilgehäuse (1) mit einem ersten Anschluß (2) und einem zweiten Anschluß (3), wobei zwischen dem ersten Anschluß (2) und dem zweiten Anschluß (3) ein Kanal (4) angeordnet ist, durch den ein Kältemittel von dem ersten Anschluß (2) zu dem zweiten Anschluß (3) strömen kann, und ein in Richtung einer Achse um einen Hub bewegliches Schieberelement (6), wobei eine Strömungsmenge des Kältemittels durch den Kanal (4) durch die Position des Schieberelements (6) entlang seines Hubs bestimmt ist. Das Schieberelement (6) den Kanal (4) über seinen Hub vollständig durchgreift.

## Beschreibung

Die Erfindung betrifft ein Expansionsventil nach dem Oberbegriff des Anspruchs 1.

Moderne Klimaanlagen verwenden häufig ein steuerbares Expansionsventil zur Regulierung des Massenstroms eines expandierenden Kältemittels. Hierdurch wird insbesondere eine notwendige Überhitzung des Kältemittels vor Eintritt in den Verdichter sichergestellt, so daß ein Wirkungsgrad der Klimaanlage in einem optimalen Bereich gehalten wird. Zudem kann gegebenenfalls auf einen den Verdichter vor flüssigem Kältemittel schützenden zusätzlichen Niederdrucksammler verzichtet werden.

EP 1 001 229 A2 beschreibt ein Expansionsventil für die Klimaanlage eines Kraftfahrzeugs, bei dem eine längsbewegliche Schiebemadel im wesentlichen senkrecht in einen verengten Expansionskanal eintaucht, welcher eine Hochdruckseite und eine Niederdruckseite des Kältemittelkreises trennt. Dabei wird der Querschnitt des Kanals teilweise freigegeben, indem die Schiebernadel nur teilweise in den Kanal eintaucht. Ein vollständiges Durchgreifen des Kanals durch die Schiebemadel ist einem maximal geschlossenen Zustand des Ventils zugeordnet. Ein maximal geöffneter Ventilzustand liegt dann vor, wenn die Schiebernadel nicht in den Kanal eingreift.

Bekannte Expansionsventile sind schwierig herzustellen und/oder in der Einsetzbarkeit begrenzt. Zudem kann es schwierig sein, den Betriebsbereich bekannter Expansionsventile einzustellen.

Es ist die Aufgabe der Erfindung, ein eingangs genanntes Expansionsventil zu schaffen, das einfach herstellbar und universell einsetzbar ist.

Diese Aufgabe wird erfindungsgemäß mit den kennzeichnenden Merkmalen des Anspruchs 1 gelöst. Dabei wird durch das vollständige Durchdringen des Kanals in jedem Ventilzustand vorteilhaft ermöglicht, das Öffnungsverhalten des Ventils allein in Abhängigkeit von der Ausformung des Schieberelements zu gewährleisten. Ferner liegt aufgrund der resultierenden Umströmung des Schieberelements ein verbessertes Strömungsverhalten des Kältemittels in dem Bereich der Kanalöffnung vor, wodurch eine Senkung des von dem Ventil verursachten Geräuschpegels ermöglicht ist.

Ein Vorteil eines erfindungsgemäßen Ventils ist, dass das Schieberelement, das einen Steuerabschnitt aufweisen kann, in jeder Position genau geführt ist. Zudem ermöglicht die Form des Steuerabschnitts eine genaue Einstellung der Ventilöffnung in Abhängigkeit von der Stellung des Schieberelements. Das Schieberelement kann als ein Längskörper mit einem konstanten Querschnitt an einem Ende und einem angrenzenden Steuerabschnitt ausgebildet sein, der, im Vergleich zu dem Endabschnitt verjüngt sein kann. Die Verjüngung kann dabei von konstantem Durchmesser sein, so daß eine Änderung der Öffnung in Abhängigkeit von einer Bewegung des Schieberelements konstant ist. Sie kann aber je nach Anforderungen auch einen variablen Querschnitt aufweisen, so daß die vorgenannte Abhängigkeit nicht konstant ist. Hierdurch läßt sich eine Feinoptimierung der Funktion des erfindungsgemäßen Expansionsventils realisieren, wodurch Wirkungsgrad und Funktionssicherheit einer Klimaanlage verbessert werden können. Zudem ist es möglich, hinsichtlich der Einsetzbarkeit des Expansionsventil in Klimaanlagen verschiedener Typen und Größen grundsätzlich einen großen gegebenen Durchmesser von Kanal und Bohrung des Schieberelements vorzusehen, wobei lediglich das Maß der Verjüngung im Bereich des Steuerabschnitts an die jeweilige Klimaanlage angepaßt wird.

Um eine gute Abdichtung zwischen Kanal und Schieberelement auf einfache Weise zu erlangen, kann es vorgesehen sein, daß der endseitige Durchmesser des Schieberelements größer als der Durchmesser des Kanals ist. Hierdurch werden die im geschlossenen Zustand des Schieberelements zwischen Kanalwand und Schieberelement definierten Dichtflächen vergrößert. Es kann vom Fachmann aber auch vorgesehen werden, dass der Kanaldurchmesser größer, kleiner oder gleich groß wie ist wie der Durchmesser des Schieberlaments oder der Öffnung, in die das Schieberelement eingebracht ist.

Weiterhin vorteilhaft ist es vorgesehen, daß das Schieberelement mittels einer Steuermechanik in Richtung der Achse verschiebbar ist, wodurch eine Einstellbarkeit des Ventils ermöglicht ist. Insbesondere vorteilhaft umfaßt die Steuermechanik eine Feder, mittels derer das Schieberelement mit einer Federkraft beaufschlagbar ist. Durch diese Federkraft kann auf einfache Weise eine mechanische Bedingung zum Öffnen des Ventils vorgegeben werden. Im Interesse einer einfachen und kostengünstigen Bauweise des Expansionsventils sind die Feder und die Steuermechanik dabei vorteilhaft bezüglich des Kanals auf derselben Seite des Schieberelements angeordnet.

Weiterhin vorteilhaft umfaßt eine Steuermechanik des Ventils eine druckbeaufschlagte Membran. Mittels der Membran, die mechanisch mit dem Schieberelement verkoppelt ist, ist auf einfache Weise eine Bewegung des Schieberelements in Abhängigkeit von Betriebsparametern der Klimaanlage ermöglicht.

Besonders bevorzugt ist dabei ein dritter, niederdruckseitiger Anschluß für das Kältemittel an dem Ventilgehäuse vorgesehen. Eine Membran der Steuermechanik kann mit dem Druck oder der Temperatur des Kältemittels, insbesondere dem Druck oder der Temperatur in der Saugleitung vor dem Verdichter, beaufschlagbar sein. Hierdurch ist auf einfache Weise eine Ansteuerung des Schieberelements in Abhängigkeit eines Zustandsparameters des Kältemittels nach seiner Expansion ermöglicht.

Weiterhin bevorzugt ist zudem ein vierter, niederdruckseitiger Anschluß für das Kältemittel an dem Ventilgehäuse vorgesehen, wobei das Kältemittel ohne wesentlichen Druckabfall durch den dritten Anschluß in das Ventilgehäuse einströmt und durch den vierten Anschluß aus dem Ventilgehäuse ausströmt, so daß das Ventilgehäuse zugleich Teil einer Niederdruckleitung, insbesondere nach Verdampfer, des Kältemittelkreises ist.

Bei einem erfindungsgemäßen Expansionsventil kann ein geschlossenes Volumen vorgesehen sein, das einen Druck auf die Membran ausübt, wobei der Druck in dem System den Druck auf die Membrane übersteigt und wobei das Volumen mit dem dritten Anschluß in thermischem Kontakt steht. Hierdurch kann die Temperatur des Kältemittels, die an dem dritten Anschluß anliegt, unmittelbar auf mechanische Weise in eine Ansteuerung des Schieberelements umsetzbar sein. Diese Umsetzung erfolgt auf besonderes effektive Weise dann, wenn das Volumen zudem mit einer definierten Menge einer geeigneten Substanz, zum Beispiel dem Kältemittel der Klimaanlage, befüllt ist.

Alternativ zu der Beaufschlagung der Membran mit einem Druck aus einem geschlossenen Volumen kann die Membran auch mit einem aus der Klimaanlage abgegriffenen Kältemitteldruck, insbesondere einem Kältemittelhochdruck, kraftbeaufschlagbar sein. Eine solche Bauweise der Steuermechanik kann insbesondere im Falle von CO₂-Klimaanlagen, die gegenüber herkömmlichen Klimaanlagen zum Teil deutlich abweichende Betriebsparameter aufweisen, Vorteile bieten.

im Interesse einer einfachen Bauweise und der Verringerung der Anzahl von Bauteilen kann vorteilhaft sein, daß eine Voreinstellung des Schieberelements mittels einer Positionierung der Steuermechanik gegenüber dem Ventilgehäuse einstellbar ist. Dies ermöglicht eine einfache Bauweise bei Verzicht auf zusätzliche Einstellschrauben, wobei lediglich die Befestigung und Abdichtung der Steuermechanik gegenüber dem Ventilgehäuse besondere konstruktive Aufmerksamkeit erfordert.

Weitere Vorteile und Merkmale eines erfindungsgemäßen Expansionsventils ergeben sich aus dem nachfolgend beschriebenen Ausführungsbeispiel sowie aus den Ansprüchen.

Nachfolgend wird ein bevorzugtes Ausführungsbeispiel eines erfindungsgemäßen Expansionsventils beschrieben und anhand der anliegenden Zeichnungen näher erläutert.
- Fig. 1: zeigt eine seitliche Draufsicht auf einen Querschnitt durch ein erfindungsgemäßes Expansionsventil.
- Fig. 2: zeigt eine seitliche Detailansicht aus Bereich A aus Fig. 1
- Fig. 3: zeigt eine Draufsicht auf einen Querschnitt durch das Expansionsventil aus Fig. 1 entlang der Linie B-B in einem geschlossenen Ventilzustand.
- Fig. 4: zeigt eine Draufsicht auf einen Querschnitt durch das Expansionsventil aus Fig. 1 entlang der Linie B-B in einem zumindest teilweise geöffneten Ventilzustand.
- Fig. 5: zeigt eine Draufsicht einer alternativen Ausführung des Querschnitts durch das Expansionsventil aus Fig. 1 entlang der Linie B-B im geschlossenen Ventilzustand.

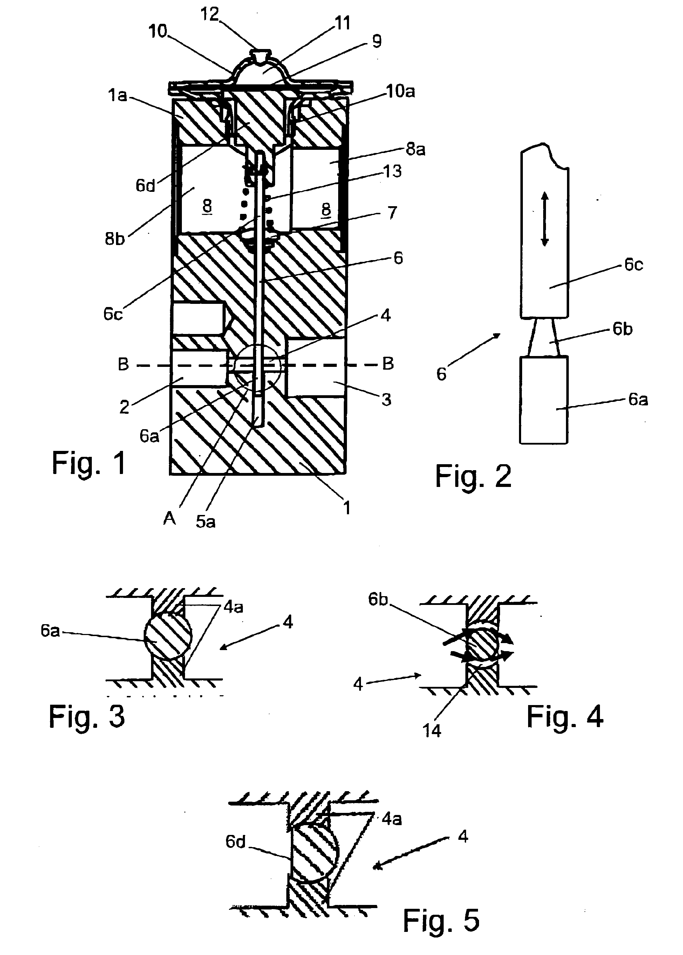

Das erfindungsgemäße Expansionsventil nach Fig. 1 umfaßt ein Ventilgehäuse 1, welches zum Zwecke der vereinfachten Montage aus mehreren Teilen bestehen kann.

In Bereich des Ventilgehäuses, in einem unteren Bereich des Gehäuses 1 aus Fig 1 dargestellt, sind ein erster Anschluß 2 und ein zweiter Anschluß 3 vorgesehen, welche sich auf gleicher Höhe und bevorzugt auf einer gemeinsamen Achse befinden. Der erste Anschluß 2 ist mit einer Kältemittelleitung verbunden, die von einem Kondensator des Kältekreises kommt und allgemein dem Hochdruckbereich des Kältekreies zugeordnet ist. Der zweite Anschluß 3 ist dem Niederdruckbereich des Kältekreises zugeordnet, was sich in der Darstellung Fig. 1 auch in dem größeren Durchmesser des Anschlusses 3 ausdrückt.

Die Anschlüsse 3, 4 sind über ein Expansionsorgan der Klimaanlage verbunden, in welchem die Expansion des zuvor komprimierten Kältemittels zum Zwecke seiner Abkühlung stattfindet. Das Expansionsorgan umfaßt einen Kanal 4, der die beiden Anschlüsse 2, 3 miteinander verbindet, wobei die gemeinsame Achse der Anschlüsse 2, 3 auch eine Mittelachse des Kanals 4 ist.

Gemäß Fig. 1 wird der Kanal 4 von einer zu der Kanalachse senkrechten Bohrung 5 durchgriffen, in der ein als Längskörper entlang einer Achse ausgeformtes Schieberelement 6 geführt ist. Die Bohrung 5 erstreckt sich beidseitig des Kanals 4, wobei ein nach unten führender Teil der Bohrung als Sackloch 5a in dem Ventilgehäuse 1 ausgebildet ist. Der Kanal 4 kann einen konstanten oder veränderlichen Durchmesser haben. Zudem kann der Durchmesser des Kanals 4 im Bereich der Überschneidung mit der Bohrung 5 größer, kleiner oder gleich groß wie die Bohrung 5 sein.

Das Schieberlement 6 (siehe Fig. 2) weist einen unteren Endabschnitt 6a auf, der als maßgenauer Zylinder geformt ist. Oberhalb des Endabschnitts 6a schließt sich ein rotationssymmetrischer, zum Endabschnitt 6a konzentrischer Steuerabschnitt 6b des Schieberelements 6 an. Der Durchmesser des Steuerabschnitts 6b verjüngt sich konisch, wobei er jeweils einen Querschnitt aufweist, der kleiner als der Querschnitt des Endabschnitts 6a ist. Insgesamt ist durch den Steuerabschnitt ein rotationssymmetrischer Kegelstumpf ausgebildet. Alternativ kann der Steuerabschnitt 6b auch andere Formen aufweisen und insbesondere auch als zylindrischer Körper mit einer Durchbrechung oder Durchbohrung ausgeformt sein.

Oberhalb des Steuerabschnitts 6b schließt sich ein wiederum zylindrischer Schaft 6c des Schieberelements 6 an, der vorliegend den gleichen Durchmesser wie der untere Endabschnitt aufweist. Es wird angemerkt, dass die Durchmesser dieser Schäfte in Abhängigkeit der gewünschten Eigenschaften abweichen können.

Wie aus Fig. 3 und Fig. 4 ersichtlich ist, kann durch eine Bewegung des Schieberelements entlang seiner Längsachse somit eine variable Öffnung 14 des Kanals 4 eingestellt werden.

In einer maximal nach oben verschobenen Position des Schieberelements (siehe Fig. 3) durchgreift der Endabschnitt 6a den Kanal 4 vollständig. Die Maßgenauigkeit ist dabei so gut (insbesondere durch entsprechenden Feinschliff von Bohrung 5 und Endabschnitt 6a), daß ein dichtendes Verschließen zumindest im Sinne der Funktion der Klimaanlage vorliegt. Eine hermetische Abdichtung im strengen Sinne ist im Regelfall nicht erforderlich. Um eine besonders gute Abdichtung zu erlangen, kann der Durchmesser des Endabschnitts 6a deutlich größer als der des Kanals 4 ausgelegt sein, wodurch eine besonders große Berührfläche ergibt. Vorliegend ist der Endabschnitt 6a jedoch lediglich zwischen zwei in dem Kanal 4 befindlichen Flanschen 4a dichtend angeordnet, was ebenfalls eine ausreichende Abdichtung ergibt. Bevorzugt können dabei zumindest die Flansche 4a oder ein anders geformter, in der Funktion entsprechender Einsatz in dem Kanal 4 aus einem Material ausgebildet sein, das die gleiche Wärmeausdehnung aufweist wie das Schieberelement 6.

Fig. 5 zeigt eine alternative Ausformung des unteren Endabschnitts 6a. Bei dieser Ausführung wurde ein Teil des unteren Endabschnitts 6a in eine flache Form bearbeitet, sie Bezugszeichen 6d. Diese Struktur ermöglicht den Austritt von in den Sacklochbereich 5a eingedrungener Flüssigkeit oder Materie, wenn das Schieberelement in das Sackloch 5a eindringt. Bei einer Ausführung der Erfindung ist die Breite des nicht-kreisförmigen Elements 6d kleiner als die Breits der Flansche 4a, um die Möglichkeit einer Leckage zu verringern, da die Drehrichtung des Schieberelements 6 bezüglic Kanal 4 sich im Laufe der Zeit ändern könnte.

Wird das Schieberelement 6 ausgehend von seiner geschlossenen Position (Fig. 3) nach gemäß Fig. 1 nach unten bewegt, so quert der Steuerabschnitt 6b den Kanal 4. Dabei taucht der Endabschnitt 6a in den sacklochartigen Bereich 5a der Bohrung 5 ein, so daß in jeder betriebsgemäßen Position des Schieberelements 6 der Kanal 4 vollständig von dem Schieberelement 6 durchgriffen wird. Durch die Verjüngung des Steuerabschnitts ergibt sich eine Öffnung 14, die sich in Abhängigkeit von der Position des Schieberelements 6 ändert. Im Bereich dieser Öffnung findet die kontrollierte Expansion des Kältemittels statt. Dabei umströmt das Kältemittel den Außenumfang des Steuerabschnitts 6b des Schieberelements 6 in einer Ebene, die im wesentlichen senkrecht zu der Längsachse des Schieberelements 6 liegt. Die Strömung des Kältemittels ist in Fig. 4 durch Pfeile angedeutet. Insgesamt resultiert dabei eine besonders geräuscharme Expansion des Kältemittels.

Durch die zuvor beschriebene konische Verjüngung des Steuerabschnitts 6b wird die Öffnung 14 nicht linear zu einer Längsbewegung des Schieberelements 6 vergrößert, sondern -wie im Fall gemäß Fig. 1 bis Fig. 4- im wesentlichen quadratisch. Damit kann dem Umstand Rechnung getragen werden, das eine nachfolgend beschriebene Steuermechanik zur Ansteuerung des Schieberelements ebenfalls nicht immer linear von einem die Steuerung auslösenden Betriebsparameter abhängt. Allgemein ist durch geeignete Formgebung des Steuerabschnitts 6b eine besonders genaue Anpassung der Reaktion des Expansionsventils auf eine Steuergröße einstellbar.

Der Schaft 6c des Schieberelements durchläuft nach oben hin zunächst die Bohrung 5 in dem Ventilgehäuse 1 und dann ein die Bohrung 5 nach oben abschließendes Dichtungselement 7, welches den Schaft 6c mittels eines O-Rings dichtend umgibt. Hierdurch ist die Kontaktfläche zwischen Schaft 6c und den Wänden der Bohrung 5 druckdicht abgeschlossen. Der Steuerkanal 8 durchläuft das Ventilgehäuse 1 in seiner oberen Hälfte und ist von dem Kanal 4 in bevorzugter Ausführung getrennt. Es kann aber auch sein, dass Kanal 8 und Kanal 4 direkter miteinander gekoppelt sind. In der Ausführung nach Fig. 1 hat der Kanal 8 einen dritten Anschluß 8a und einem vierten Anschluß 8b. Der dritte Anschluß 8a ist mit einen Ausgang eines Verdampfers des Kältemittelkreises verbunden, und der vierte Anschluß 8b ist mit einem Saugeingang eines Verdichters des Kältemittelkreises verbunden. Das den Steuerkanal 8 durchfließende Kältemittel befindet sich somit bezüglich des Kreislaufs in seinem niedrigsten Druckbereich, was sich auch in dem größeren Durchmesser der Anschlüsse 8a, 8b gegenüber den Durchmessern der Anschlüsse 2, 3 ausdrückt.

Der Schaft 6c durchquert nach Austritt aus dem Dichtungselement 7 den Steuerkanal 8 und mündet in einem Stempel 6d des Schieberelements 6. Dieser Stempel 6d durchgreift eine Durchbrechung in einem Bereich 1a des Ventilgehäuses 1. Eine obere Abschlußfläche des Stempels 6d steht mit einer Membran 9 in zumindest in einer Richtung kraftschlüssiger Verbindung. Die Membran ist in einem Membrangehäuse 10 gehalten, wobei ein oberer Teil des Membrangehäuses 10 und die bezüglich der Verbindung des Stempels 9 jenseitige Fläche der Membran ein Volumen 11 hermetisch abschließen. In dem Membrangehäuse 10 ist ein dichtender Stopfen 12 vorgesehen, mittels dessen das Volumen 11 mit einer definierten Menge einer Substanz unter definierten Bedingungen (z.B. Druck/Temperatur) befüllbar ist.

Ein Kragen 10a des Membrangehäuses ist in der Durchbrechung des Ventilgehäuses 1a mittels eines Gewindes festgelegt, wobei zudem (nicht dargestellte) Dichtungsmittel eine Abdichtung des Steuerkanals 8 sicherstellen. Der Stempel 8 ist dabei an einer Innenseite des Kragens 10a längsbeweglich geführt.

Es ist vorgesehen, daß das Steuermittel in einem gewissen Toleranzbereich unterschiedlich tief in die Durchbrechung dichtend einschraubbar ist, wodurch eine Justage der Eintauchtiefe des Schieberelements 6 in die Bohrung voreinstellbar ist. Dies gilt im wesentlichen dem Ausgleich der beim der Herstellung der Einzelteile unvermeidlichen Toleranzen.

Ferner ist das Schieberelement 6 mittels einer Schraubenfeder 13 gegen die Unterseite des Steuerkanals 8 abgestützt, wobei die Schraubenfeder 13 den Schaft 6c umfängt und gegen den Stempel 6d abgestützt ist. Insgesamt ist das Schieberelement hierdurch mit einer nach oben wirkenden Federkraft beaufschlagt.

Die Feder 13, die Membran 9, das Membrangehäuse 10 und das eingeschlossene Volumen 11 bilden somit eine Steuermechanik aus, mittels derer das Schieberelement 6 in Abhängigkeit von Betriebsparametern der Klimaanlage gesteuert bewegbar ist:

Auf das Schieberelement wirken bei dieser Anordnung im wesentlichen drei Kräfte, nämlich die auf den Stempel 6d von unten wirkende Druckkraft des Kältemittels im Steuerkanal 8, die Federkraft der Feder 13 und die diesen beiden Kräften entgegengerichtete Druckkraft, die das Volumen 11 bzw. die darin befindliche Substanz auf die Membran 9 ausübt. Das Schieberelement nimmt daher in Richtung seiner Längsachse immer eine Position ein, die durch das Zusammenwirken dieser Kräfte bestimmt ist. Die von unten auf das Schieberelement 6 wirkende Druckkraft des Kältemittels im Kanal 4 ist dabei vernachlässigbar, da das Schieberelement 6 dort einen vergleichsweise kleinen Querschnitt aufweist.

Das Volumen 11 steht über die Fläche der Membran 9 sowie den Stempel 6d bzw. den zwischen Stempel 6d und Kragen 10a verbleibenden Spalt in thermischem Kontakt mit dem Kältemittel des Steuerkanals 8. Daher bewirken sowohl ein Druckabfall des Kältemittels im Steuerkanal 8 (bzw. nach Verdampfer) als auch eine Temperaturerhöhung des Kältemittels im Steuerkanal 8 für eine Erhöhung der resultierenden nach unten gerichteten Kraftkomponente und somit für eine Bewegung des Schieberelements 6 in seine Öffnungsrichtung nach unten. Eine Senkung der Temperatur im Bereich des Steuerkanals 8 führt dagegen zu einem Schließen der Öffnung 14. Durch den somit verringerten Massenstrom des Kältemittels im Verdampfer ist ein Anstieg der Kältemitteltemperatur im Steuerkanal 8 bzw. in der Saugleitung des Verdichters verbunden. Auf diese Weise ist ein mechanischer Regelkreis geschaffen, mittels dessen bei geeigneter Vorjustage der Steuermechanik eine ausreichende Überhitzung des Kältemittels nach Verdampfer sichergestellt ist. Dies wiederum führt zu einem guten Wirkungsgrad der Anlage und vermeidet einen Eintritt kondensierten Kältemittels in den Verdichter.

Es versteht sich, daß die erfindungsgemäßen Eigenschaften des Expansionsventils nicht auf die vorliegende Ausführungsform beschränkt sind. Insbesondere kann jede beliebige bekannte Ansteuerung des Schiebers realisiert sein, inklusive einer rein elektromechanischen Ansteuerung in Verbindung mit einer elektronischen Steuereinrichtung.

Während die Erfindung unter Betonung bestimmter Ausführungen beschrieben wurde, ist es zu beachten, dass die vorstehende Beschreibung auf die gegenwärtig als bestmöglich angesehene Ausführung der Erfindung beschränkt wurde. Es können offensichtlich verschiedene Änderungen an der Erfindung vorgenommen werden, und es lönnen einige oder sämtliche Vorteile der Erfindung erzielt werden. Es ist nicht beabsichtigt, dass die Erfindung sämtliche der vorbeschriebenen Merkmale und Eigenschaften oder ihre Kombinationen enthält. In vielen Fällen sind bestimmte Merkmale und Eigenschaften nicht zur Ausführung anderer Merkmale und Eigenschaften wesentlich. Die Erfindung ist lediglich durch die anliegenden Ansprüche und deren Äquivalente limitiert, da die Ansprüche so zu verstehen sind, dass sie auch Variationen und Änderungen umfassen, die nicht unter ihren Wortlaut fallen.

## Patentansprüche

1. Expansionsventil, insbesondere für eine Klimaanlage eines Kraftfahrzeugs, umfassend
ein Ventilgehäuse (1) mit einem ersten Anschluß (2) und einem zweiten Anschluß (3), wobei zwischen dem ersten Anschluß (2) und dem zweiten Anschluß (3) ein Kanal (4) angeordnet ist, durch den ein Kältemittel von dem ersten Anschluß (2) zu dem zweiten Anschluß (3) strömen kann, und
ein in Richtung einer Achse um einen Hub bewegliches Schieberelement (6),
wobei eine Strömungsmenge des Kältemittels durch den Kanal (4) durch die Position des Schieberelements (6) entlang seines Hubs bestimmt ist,
**dadurch gekennzeichnet,**
**daß** das Schieberelement (6) den Kanal (4) über seinen Hub vollständig durchgreift.

2. Expansionsventil nach Anspruch 1, **dadurch gekennzeichnet, daß** das Schieberelement (6) in einer den Kanal (4) durchgreifenden Bohrung (5) angeordnet ist.

3. Expansionsventil nach Anspruch 2, **dadurch gekennzeichnet, daß** das Schieberelement (6) als Längskörper ausgebildet ist, welcher einen Endabschnitt (6a) konstanten Querschnitts und einen daran anschließenden Steuerabschnitt (6b) mit verjüngtem Querschnitt aufweist.

4. Expansionsventil nach Anspruch 3, **dadurch gekennzeichnet, daß** der Steuerabschnitt (6b) einen über seine Länge veränderlichen Querschnitt aufweist.

5. Expansionsventil nach Anspruch 3 oder 4, **dadurch gekennzeichnet, daß** der Durchmesser des Endabschnitts (6a) des Schieberelements (6) größer als der Durchmesser des Kanals (4) ist

6. Expansionsventil nach einem der Ansprüche 1 bis 5, **dadurch gekennzeichnet, daß** die Position des Schieberelements (6) entlang seines Hubs mittels einer Steuermechanik (9, 10, 11, 13) einstellbar ist.

7. Expansionsventil nach Anspruch 6, **dadurch gekennzeichnet, daß** die Steuermechanik (9, 10, 11, 13) eine Feder (13) umfaßt, mittels derer das Schieberelement (6) mit einer Federkraft beaufschlagbar ist.

8. Expansionsventil nach Anspruch 7, **dadurch gekennzeichnet, daß** die Feder (13) und die Steuermechanik (9, 10, 11, 13) bezüglich des Kanals (4) auf der gleichen Seite angeordnet sind.

9. Expansionsventil nach einem der Ansprüche 6 bis 8, **dadurch gekennzeichnet, daß** die Steuermechanik (9, 10, 11, 13) eine druckbeaufschlagte Membran (9) umfaßt.

10. Expansionsventil nach Anspruch 9, **dadurch gekennzeichnet, daß** ein dritter, niederdruckseitiger Anschluß (8a) für das Kältemittel an dem Ventilgehäuse (1) vorgesehen ist.

11. Expansionsventil nach Anspruch 10, **dadurch gekennzeichnet, daß** ein vierter, niederdruckseitiger Anschluß (8b) für das Kältemittel an dem Ventilgehäuse (1) vorgesehen ist, wobei ein zweiter Kältmittelkanal zwischen dem dritten Anschluß und dem vierten Anschluß vorgesehen ist.

12. Expansionsventil nach Anspruch 10 oder 11, **dadurch gekennzeichnet, daß** durch den an dem dritten Anschluß (8a) anliegenden Kältemitteldruck eine Kraft auf die Membran (9) ausübbar ist.

13. Expansionsventil nach einem der Ansprüche 10 bis 12, **dadurch gekennzeichnet, daß** ein geschlossenes Volumen (11) einen Druck auf die Membran (9) ausübt, wobei das Volumen (11) mit dem Kältemittel des dritten Anschlusses (8a) in thermischem Kontakt steht.

14. Expansionsventil nach einem der Ansprüche 9 bis 12, **dadurch gekennzeichnet, daß** der Druck von Kältemittel aus einem Kältemittelkanal eine Kraft auf die die Membran (9) ausübt.

15. Expansionsventil nach einem der Ansprüche 9 bis 14, **dadurch gekennzeichnet, daß** eine Voreinstellung des Schieberelements (6) mittels einer Positionierung der Steuermechanik (9, 10, 11, 13) gegenüber dem Ventilgehäuse (1) einstellbar ist.
